# EUROPÄISCHE PATENTSCHRIFT

(11) **EP 2 877 262 B1**
(45) Veröffentlichungstag und Bekanntmachung des Hinweises auf die Patenterteilung: **06.02.2019**
(21) Anmeldenummer: 13742608.6
(22) Anmeldetag: 24.07.2013
(51) Int. Cl.: B01D 35/18, B01D 35/30, B01D 27/08

(54) **FILTEREINRICHTUNG**
FILTER DEVICE
DISPOSITIF FILTRANT

(30) Priorität: 26.07.2012 DE 102012213163
(43) Veröffentlichungstag der Anmeldung: 03.06.2015
(73) Patentinhaber: Mahle International GmbH, 70376 Stuttgart (DE)
(72) Erfinder: HÄUSSERMANN, Uli, 70734 Fellbach (DE); HOFFMANN, Dierk, 71229 Leonberg (DE)
(74) Vertreter: BRP Renaud & Partner mbB Rechtsanwälte Patentanwälte Steuerberater
(86) Internationale Anmeldenummer: PCT/EP2013/065565
(87) Internationale Veröffentlichungsnummer: WO 2014/016319

(56) Entgegenhaltungen:
- EP-A1- 1 854 527
- WO-A1-2011/107262
- DE-A1- 10 023 649
- DE-A1-102010 043 218
- GB-A- 2 179 868
- US-A- 4 091 265

## Beschreibung

Die vorliegende Erfindung betrifft eine Filtereinrichtung mit einem Filtergehäusetopf und einem damit verbundenen Filtergehäusedeckel.

Um Filtereinrichtungen insbesondere auch für einen Crashfall sicher auslegen zu können, sind deren Filtergehäuse oftmals aus Metall ausgebildet, wodurch die Filtereinrichtung an sich eine deutlich erhöhte Stabilität aufweist. Nachteilig bei derartigen Filtergehäusen aus Metall ist jedoch, dass sämtliche Stutzen zur Ver- und Entsorgung der Filtereinrichtung aufwendig angelötet bzw. angeschweißt und abgedichtet werden müssen, wodurch ein nicht unerheblicher Kostenfaktor entsteht.

Aus der GB 2 179 868 A ist eine Filtereinrichtung mit einem Filtergehäusetopf und mit einem damit verbindbaren Filtergehäusedeckel bekannt. Der Filtergehäusetopf ist aus Metall ausgebildet, wobei im Bodenbereich zumindest eine in der Art einer Lochmaske ausgebildete Durchgangsöffnung vorgesehen ist. Hierin eingesetzt werden kann ein aus Kunststoff ausgebildetes Bauteil mit zumindest einem Stutzen, das gegenüber dem Filtergehäusetopf abgedichtet ist und durch die zumindest eine Durchgangsöffnung im Bodenbereich des Filtergehäusetopfs hindurchragt.

Aus der DE 10 2010 043 218 A1 ist wiederum eine Filtereinrichtung mit einem Filtergehäusetopf und einem damit verbindbaren Filtergehäusedeckel bekannt. Der Filtergehäusedeckel ist dabei auch in der Art einer Lochmaske ausgebildet, wobei zusätzlich ein aus Kunststoff ausgebildetes Bauteil mit einer Heizeinrichtung und zumindest einem Stutzen zur Ver-/Entsorgung der Filtereinrichtung vorgesehen ist.

Aus der WO 2011/107262 A1 ist eine weitere Filtereinrichtung bekannt.

Die vorliegende Erfindung beschäftigt sich daher mit dem Problem, für eine Filtereinrichtung eine verbesserte oder zumindest eine alternative Ausführungsform anzugeben, die sich einerseits durch eine hohe Crash-Stabilität und andererseits durch vergleichsweise geringe Fertigungskosten auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer Filtereinrichtung mit einem metallischen Filtertopf, einen Bodenbereich dieses Filtertopfes in der Art einer Lochmaske mit zumindest einer, vorzugsweise auch mehrerer Durchgangsöffnungen, auszuführen, durch welche bei fertig montierter Filtereinrichtung zumindest ein Stutzen aus Kunststoff zur Ver-/Entsorgung der Filtereinrichtung hindurchgesteckt werden kann. Selbstverständlich können in diesem Zusammenhang auch Durchgangsöffnungen für elektrische Leitungen vorgesehen werden. Der zumindest ein aus Kunststoff ausgebildeter Stutzen zur Ver- und Entsorgung der Filtereinrichtung ist über das Bauteil gegenüber dem Filtergehäusetopf abgedichtet, so dass eine zusätzliche aufwändige Dichtung entbehrlich ist. Das einfache Durchstecken des Stutzens des aus Kunststoff ausgebildeten Bauteils erübrigt darüber hinaus ein aufwändiges Anlöten von metallischen Stutzen am Filtergehäusetopf, wodurch die crashoptimierte Filtereinrichtung vergleichsweise kostengünstig herstellbar ist. Die metallische Ausbildung des Filtergehäusetopfes und/oder des damit verbindbaren Filtergehäusedeckels dient insbesondere zur Aufnahme von Druckspannungen und Pulsationen. Das Bauteil selbst weist darüber hinaus eine Heizeinrichtung auf, die Bestandteil des Bauteils aus Kunststoff ist, bestenfalls sogar vom Kunststoff des Bauteils umschlossen und damit fest in das Bauteil eingebunden ist. Die Montage des Bauteils aus Kunststoff, hier also der Heizeinrichtung mit den entsprechend angeschlossenen Stutzen erfolgt durch ein einfaches Einlegen bzw. Einschieben des Bauteils in den Filtergehäusetopf und zwar so weit, bis die Stutzen des Bauteils die zugehörigen Öffnungen durchgreifen und eine Stirnseite des Bauteils vorzugsweise flächig am Boden des Filtergehäusetopfes anliegt. Anschließend kann ein Filterelement, beispielsweise ein Ringfilterelement in den Filtergehäusetopf eingebaut werden, um daran anschließend das Filtergehäuse durch einen entsprechenden Filtergehäusedeckel zu verschließen. Der Filtergehäusedeckel selbst kann aus Kunststoff oder aus Metall ausgebildet sein und einen Stutzen aufweisen, an welchem beispielsweise Ver- oder Entsorgungsleitungen anbindbar sind. Eine Verbindung zwischen dem Filtergehäusedeckel und dem Filterelement kann beispielsweise durch eine Steckverbindung erfolgen.

Generell soll in der gesamten Anmeldung unter dem Begriff "Filtergehäusetopf" ein erstes Filtergehäuseteil und unter "Filtergehäusedeckel" ein zweites Filtergehäuseteil verstanden werden, so dass in dieser Lesart gemäß dem ersten Anspruch das erste Filtergehäuseteil aus Metall ausgebildet ist und in einem Bodenbereich zumindest eine in der Art einer Lochmaske ausgebildete Durchgangsöffnung aufweist. Das aus Kunststoff ausgebildete Bauteil weist eine Heizeinrichtung und zumindest einen Stutzen zur Ver-/Entsorgung der Filtereinrichtung auf und ist gegenüber dem ersten Filtergehäuseteil abgedichtet und ragt zugleich durch die zumindest eine Durchgangsöffnung im Bodenbereich des ersten Filtergehäuseteils hindurch. Es ist also klar, dass der Begriff "Filtergehäusetopf" nicht unbedingt eine topfartige Ausbildung des ersten Filtergehäuseteils bedingt, ebenso wenig wie der Begriff "Filtergehäusedeckel" eine deckelartige Ausgestaltung.

Zweckmäßig weist der Bodenbereich des Filtergehäusetopfes eine weitere Durchgangsöffnung auf, durch welche beispielsweise ein Stecker der Heizeinrichtung vorzugsweise passgenau hindurchragt. Durch einerseits den Stutzen und andererseits den Stecker der Heizeinrichtung bzw. des Bauteils ist somit lediglich eine einzige mögliche Einbauposition gegeben, wodurch insbesondere eine Fehlmontage ausgeschlossen werden kann.

Bei einer weiteren vorteilhaften Ausführungsform der erfindungsgemäßen Lösung ist der Filtergehäusedeckel direkt mit dem Filtergehäusetopf verbunden, beispielsweise verschraubt. Selbstverständlich sind auch weitere Verbindungsmaßnahmen, wie beispielsweise ein Einpressen des Filtergehäusedeckels in einen sich aufweitenden Bereich des Filtergehäusetopfes denkbar, ebenso wie ein Schraubverschluss oder ein Bajonettverschluss. Die zuletzt genannten Verbindungsarten bieten dabei den großen Vorteil, den Filtergehäusedeckel zerstörungsfrei und einfach vom Filtergehäusetopf lösen zu können, beispielsweise zum Austausch des im Filtergehäusetopf angeordneten Filterelements.

Erfindungsgemäß ist die Heizeinrichtung in den Kunststoff des Bauteils eingebettet, also fest mit diesem verbunden. Denkbar ist hierbei insbesondere, dass die Heizeinrichtung in einem speziellen Kunststoffspritzgussverfahren mit dem Kunststoff des Bauteils umspritzt und dadurch geschützt in diesem angeordnet wird. Das Bauteil und die Heizeinrichtung sind somit als einteiliges Bauelement ausgebildet und können zusammen auf einfache Weise im Filtergehäusetopf montiert werden.

Zweckmäßig ist die jeweils zumindest eine Durchgangsöffnung im Filtergehäusetopf und/oder im Filtergehäusedeckel gestanzt. Ein Ausstanzen der jeweiligen Durchgangsöffnungen ermöglicht ein einerseits rationelles und andererseits qualitativ hochwertiges Ausbilden der Durchgangsöffnung, wobei eine hohe Maßgenauigkeit der Durchgangsöffnung entscheidend für die spätere Passgenauigkeit zum Bauteil ist.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

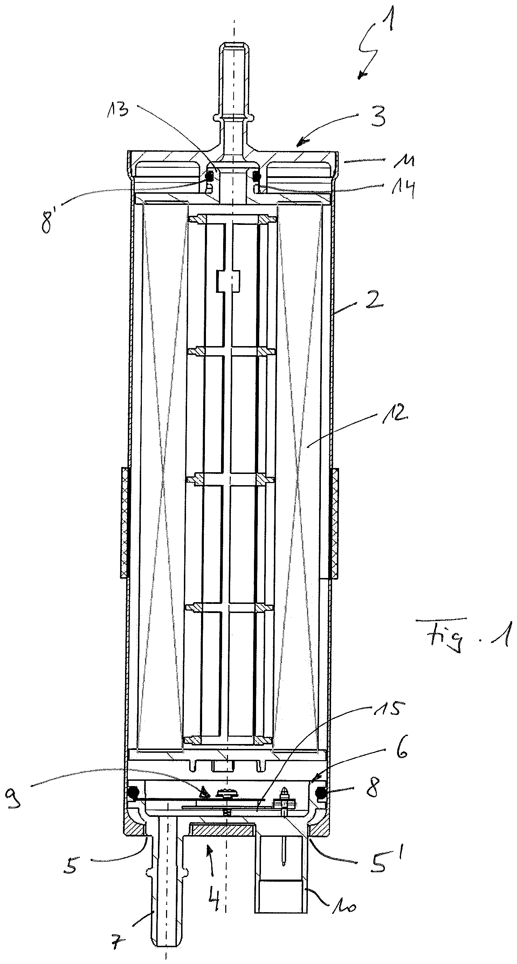

Die einzige Figur 1 zeigt eine Schnittdarstellung durch eine erfindungsgemäße Filtereinrichtung.

Entsprechend der Figur 1, weist eine erfindungsgemäße Filtereinrichtung 1 einen Filtergehäusetopf 2 sowie einen damit verbundenen Filtergehäusedeckel 3 auf. Der Filtergehäusetopf 2 ist dabei aus Metall ausgebildet und weist in einem Bodenbereich 4 zumindest eine in der Art einer Lochmaske ausgebildete Durchgangsöffnung 5 auf. In der gezeichneten Ausführungsform besitzt die erfindungsgemäße Filtereinrichtung 1 zwei Durchgangsöffnungen 5 und 5' im Bodenbereich 4. Darüber hinaus besitzt die Filtereinrichtung 1 ein aus Kunststoff ausgebildetes Bauteil 6 in der Art zumindest eines Stutzens 7 zur Ver- oder Entsorgung der Filtereinrichtung 1. Das aus Kunststoff ausgebildete Bauteil 6 ist gegenüber dem Filtergehäusetopf 2 abgedichtet, hier durch eine Ringdichtung 8, wobei der Stutzen 7 durch die Durchgangsöffnung 5 im Bodenbereich des Filtergehäusetopfes 2 hindurchragt. Zusätzlich weist das Bauteil 6 eine Heizeinrichtung 9 auf. Die Heizeinrichtung 9 ist dabei in den Kunststoff des Bauteils 6 eingebettet. Die Heizeinrichtung 9 besitzt üblicherweise zumindest ein PTC-Heizelement 15 und ist dadurch in der Lage, das zu reinigende Fluid, beispielsweise Kraftstoff oder Öl, zu erwärmen.

Durch den Filtergehäusetopf 2 aus Metall kann die Filtereinrichtung 1 generell stabiler aufgebaut und damit crashoptimiert ausgelegt werden. Die aus Kunststoff ausgebildeten Stutzen 7 besitzen im Vergleich zu aus Metall ausgebildeten Stutzen eine deutlich höhere Elastizität und brechen dadurch bei auf diese einwirkenden Kräfte nicht so leicht ab. Zudem ist die Fertigung einer erfindungsgemäßen Filtereinrichtung 1 deutlich einfacher, da die Stutzen 7 des Bauteils 6 im Spritzgussverfahren einfach und kostengünstig hergestellt werden können und nicht wie bisher bei metallischen Stutzen aufwändig angelötet werden müssen. In gleicher Weise kann auch der Stecker 10 für die Heizeinrichtung 9 mit angegossen werden.

Betrachtet man die Figur 1 weiter, so kann man erkennen, dass im Filtergehäusetopf 2 eine weitere Durchgangsöffnung, nämlich die Durchgangsöffnung 5', vorgesehen ist, durch welche der Stecker 10 einer elektrischen Verbindung der Heizeinrichtung 9 ragt.

Eine Verbindung des Filtergehäusedeckels 3 mit dem Filtergehäusetopf 2 kann beispielsweise über eine nicht gezeigte Schraubverbindung erfolgen, wobei auch denkbar ist, dass der Filtergehäusedeckel 3 einfach in einen sich gegebenenfalls aufweiteten Randbereich 11 des Filtergehäusetopfes 2 dicht eingepresst wird. Der Filtergehäusedeckel 3 selbst kann aus Metall oder aus Kunststoff, insbesondere als kostengünstiges Kunststoffspritzgussteil, ausgebildet sein. Bei einer metallischen Ausbildung ist dabei insbesondere eine Ausbildung aus Aluminium, ebenso wie für den Filtergehäusetopf 2 denkbar.

Im Filtergehäusetopf 2 ist darüber hinaus ein Filterelement 12 angeordnet, welches im vorliegenden Fall als Ringfilterelement ausgebildet ist und beispielsweise von außen nach innen durchströmt wird. Das Filterelement 12 greift mit einem zentralen Stutzen 13 in eine ebenfalls zentral am Filtergehäusedeckel 3 angeordnete Aufnahme 14 ein und ist dort über eine Ringdichtung 8' gegenüber dem Filtergehäusedeckel 3 abgedichtet. Generell ist das Filterelement 12 auch einteilig mit dem Bauteil 6 ausgebildet, so dass bei einem Austausch des Filterelements 12 zugleich auch das Bauteil 6 und die damit verbundene Heizeinrichtung 9 ausgetauscht werden. Rein theoretisch ist selbstverständlich auch ein Filtergehäusedeckel 3 aus Metall denkbar, in welchem ebenfalls eine in der Art einer Lochmaske ausgestanzte Durchgangsöffnung vorgesehen ist, durch welche dann ein aus Kunststoff ausgebildeter Stutzen hindurchragt.

Die gezeigte Filtereinrichtung 1 ist beispielsweise als Schmier- oder Kraftstofffilter ausgebildet, wobei insbesondere bei einer Ausbildung als Kraftstofffilter die Heizeinrichtung 9 eine Parafinausfällung, insbesondere bei Dieselkraftstoffen, bei niedrigen Temperaturen verhindert.

Mit der erfindungsgemäßen Filtereinrichtung 1 kann eine nicht nur crashoptimierte Variante geschaffen werden, sondern die erfindungsgemäße Filtereinrichtung 1 lässt sich auch leicht und mit wenig Aufwand und damit kostengünstig montieren. Zudem ist sie wartungsfreundlich, da eine Demontage ebenfalls durch Abnahme des Filtergehäusedeckels 3 vom Filtergehäusetopf 2 und ein Herausziehen des Filterelements 2 bzw. des Bauteils 6 einfach möglich ist.

## Patentansprüche

1. Filtereinrichtung (1) mit einem Filtergehäusetopf (2) und einem damit verbindbaren Filtergehäusedeckel (3), wobei der Filtergehäusetopf (2) aus Metall ausgebildet ist und in einem Bodenbereich (4) zumindest eine in der Art einer Lochmaske ausgebildete Durchgangsöffnung (5) aufweist, wobei aus Kunststoff ausgebildetes Bauteil (6) mit einer Heizeinrichtung (9) und zumindest einem Stutzen (7) zur Ver-/Entsorgung der Filtereinrichtung (1) vorgesehen ist, das gegenüber dem Filtergehäusetopf (2) abgedichtet ist und durch die zumindest eine Durchgangsöffnung (5) im Bodenbereich (4) des Filtergehäusetopfes (2) hindurchragt,
**dadurch gekennzeichnet, dass**
- das Bauteil (6) samt Heizeinrichtung (9) und einem Filterelement (12) einteilig ausgebildet, insbesondere über eine Clipsverbindung miteinander verbunden, sind,
- dass die Heizeinrichtung (9) in den Kunststoff des Bauteils (6) eingebettet, also fest mit diesem verbunden ist.

2. Filtereinrichtung nach Anspruch 1,
**dadurch gekennzeichnet,**
**dass** im Filtergehäusetopf (2) eine weitere Durchgangsöffnung (5') vorgesehen ist, durch welche ein Stecker (10) einer elektrischen Verbindung der Heizeinrichtung (9) ragt.

3. Filtereinrichtung nach Anspruch 1 oder 2,
**dadurch gekennzeichnet,**
**dass** der Filtergehäusedeckel (3) direkt mit dem Filtergehäusetopf (2) verbunden, insbesondere verschraubt, ist.

4. Filtereinrichtung nach einem der Ansprüche 1 bis 3,
**dadurch gekennzeichnet,**
**dass** die Filtereinrichtung (1) als Schmier- oder Kraftstofffilter ausgebildet ist.

5. Filtereinrichtung nach einem der Ansprüche 1 bis 4,
**dadurch gekennzeichnet,**
**dass** der Filtergehäusedeckel (3) und/oder der Filtergehäusetopf (2) aus Aluminium ausgebildet sind.

6. Filtereinrichtung nach einem der Ansprüche 2 bis 5,
**dadurch gekennzeichnet,**
**dass** zumindest eine der Durchgangsöffnungen (5,5') im Filtergehäusetopf (2) gestanzt ist.

7. Filtereinrichtung nach einem der Ansprüche 1 bis 6,
**dadurch gekennzeichnet,**
**dass** die Heizeinrichtung (9) zumindest ein PTC-Heizelement (15) aufweist.

## Claims

1. Filter device (1) having a filter housing jar (2) and a filter housing cover (3) which can be connected thereto, wherein the filter housing jar (2) is formed from metal and, in a bottom region (4), has at least one through-opening (5) formed in the manner of an aperture mask, wherein a component (6) formed from plastic having a heating device (9) and at least one fitting (7) for supply to, or removal from, the filter device (1) is provided, which component is sealed with respect to the filter housing jar (2) and is penetrated by the at least one through-opening (5) in the bottom region (4) of the filter housing jar (2),
**characterised in that**
- the component (6) together with the heating device (9) and a filter element (12) are integrally formed, in particular connected together by means of a clip connection, and
- the heating device (9) is embedded in the plastic of the component (6), i.e. is fixedly connected with same.

2. Filter device according to claim 1,
**characterised in that**
a further through-opening (5') is provided in the filter housing jar (2) through which a plug (10) of an electrical connection of the heating device (9) projects.

3. Filter device according to claim 1 or 2,
**characterised in that**
the filter housing cover (3) is connected, in particular screwed, to the filter housing jar (2).

4. Filter device according to any of claims 1 to 3,
**characterised in that**
the filter device (1) is designed as a lubricant filter or fuel filter.

5. Filter device according to any of claims 1 to 4,
**characterised in that**
the filter housing cover (3) and/or the filter housing jar (2) are formed from aluminium.

6. Filter device according to any of claims 2 to 5,
**characterised in that**
at least one of the through-openings (5,5') in the filter housing jar (2) is punched.

7. Filter device according to any of claims 1 to 6,
**characterised in that**
the heating device (9) has at least one PTC heating element (15).

## Revendications

1. Dispositif de filtre (1) comprenant un pot de logement de filtre (2) et un couvercle de logement de filtre (3) qui peut être relié à celui-ci, dans lequel le pot de logement de filtre (2) est formé de métal et présente dans une zone de fond (4) au moins une ouverture de passage (5) conformée à la façon d'un masque à trous, dans lequel il est prévu un composant (6) formé de matière plastique avec un dispositif de chauffage (9) et au moins une tubulure (7) pour alimenter/décharger le dispositif de filtre (1), lequel composant est étanché par rapport au pot de logement de filtre (2) et par lequel passe au moins une ouverture de passage (5) dans la zone de fond (4) du pot de logement de filtre (2),
**caractérisé en ce que**
- le composant (6) y compris le dispositif de chauffage (9) et un élément de filtre (12) sont formés d'un seul tenant, en particulier reliés l'un à l'autre par clipsage ;
- le dispositif de chauffage (9) est noyé dans la matière plastique du composant (6) et donc solidement relié à celui-ci.

2. Dispositif de filtre selon la revendication 1,
**caractérisé en ce que**,
il est prévu dans le pot de logement de filtre (2) une autre ouverture de passage (5') par laquelle passe une fiche mâle (10) d'une liaison électrique du dispositif de chauffage (9).

3. Dispositif de filtre selon la revendication 1 ou 2,
**caractérisé en ce que**,
le couvercle de logement de filtre (3) est relié directement au pot de logement de filtre (2), en particulier vissé.

4. Dispositif de filtre selon l'une quelconque des revendications 1 à 3,
**caractérisé en ce que**,
le dispositif de filtre (1) est conformé en filtre contre les graisses ou les carburants.

5. Dispositif de filtre selon l'une quelconque des revendications 1 à 4,
**caractérisé en ce que**,
le couvercle de logement de filtre (3) et/ou le pot de logement de filtre (2) sont formés d'aluminium.

6. Dispositif de filtre selon l'une quelconque des revendications 2 à 5,
**caractérisé en ce que**,
au moins l'une des ouvertures de passage (5, 5') est perforée dans le pot de logement de filtre (2).

7. Dispositif de filtre selon l'une quelconque des revendications 1 à 6,
**caractérisé en ce que**,
le dispositif de chauffage (9) présente au moins un élément chauffant de PTC (15).
